**Europäisches Patentamt**

(19) **European Patent Office**

**Office européen des brevets**

(11) Veröffentlichungsnummer: **0 176 727**
**B1**

(12) **EUROPÄISCHE PATENTSCHRIFT**

(45) Veröffentlichungstag der Patentschrift:
**13.07.88**

(51) Int. Cl.⁴: **G 21 C 21/02**

(21) Anmeldenummer: **85110317.6**

(22) Anmeldetag: **17.08.85**

(54) Verfahren zur Herstellung von kugelförmigen Brennelementen.

(30) Priorität: **29.09.84 DE 3435861**

(43) Veröffentlichungstag der Anmeldung:
**09.04.86 Patentblatt 86/15**

(45) Bekanntmachung des Hinweises auf die Patenterteilung:
**13.07.88 Patentblatt 88/28**

(84) Benannte Vertragsstaaten:
**CH DE FR GB LI**

(56) Entgegenhaltungen:
**DE - B - 1 158 641**
**FR - A - 1 520 232**
**FR - A - 2 244 728**
**GB - A - 1 256 033**
**US - A - 3 439 073**

(73) Patentinhaber: **HOBEG**
**Hochtemperaturreaktor-Brennelement GmbH,**
**Rodenbacher Chaussee 6, D-6450 Hanau 11 (DE)**

(72) Erfinder: **Becker, Hans-Joachim,**
**Kurt-Schumacher-Platz 12, D-6463 Freigericht 1 (DE)**
Erfinder: **Heit, Werner, Dr., Wiesenstrasse 16,**
**D-6464 Linsengericht (DE)**
Erfinder: **Rind, Wilhelm, Dr., Waldstrasse,**
**D-6463 Freigericht 5 (DE)**
Erfinder: **Warzawa, Wolfgang, Wiesenstrasse 15,**
**D-6450 Hanau 9 (DE)**

(74) Vertreter: **Nowak, Gerhard, DEGUSSA AG Fachbereich**
**Patente Rodenbacher Chaussee Postfach 1345,**
**D-6450 Hanau 1 (DE)**

## Beschreibung

Die Erfindung betrifft ein Verfahren zur Herstellung von kugelförmigen Brenn- oder Absorberelementen für Hochtemperaturreaktoren, bestehend aus einer graphischen Matrix und darin eingebetteten beschichteten Partikeln, durch Pressen eines Gemisches von Binderharz enthaltendem Graphitpresspulver mit beschichteten Kernbrennstoff- oder Absorberpartikeln zu einer Kugel, Verkoken des Binderharzes in einem Ofen mit Gasspülung und Vakuumglühen bis etwa 2000 °C.

Kugelförmige Brenn- oder Absorberelemente für Hochtemperaturreaktoren, wie z. B. in der DE-PS 1909 871 beschrieben, enthalten den nuklearen Brennstoff oder Absorberstoff in Form beschichteter Partikeln, eine graphitische Matrix eingebettet sind. Bei der Herstellung dieses Matrixmaterials werden fein gemahlene hochkristalline Natur- und/oder Elektrographitsorten mit einem Binderharz versetzt und durch Misch- oder Knetprozesse sowie erneutes Mahlen auf Sollkörnung zu einem sogenannten Graphitpresspulver weiterverarbeitet. Abschliessend werden die beschichteten Partikeln, gegebenenfalls nach einem zusätzlichen Umhüllschritt, in dem sie mit einer grössenordnungsmässig 100 μm dicken Presspulverschicht überzogen werden, mit Graphitpresspulver gemischt und zu kugelförmigen Brennelementen verpresst. Das Binderharz wird dann in einem Verkokungsschritt zu Kohlenstoff verkokt, abschliessend erfolgt noch eine Reinigung und Entgasung der Elemente, wobei diese bei Temperaturen oberhalb 1600 °C in Vakuum geglüht werden.

Als Binderharze für das Matrixmaterial kommen Peche sowie thermo- und duroplastische Kunstharze infrage, insbesondere werden thermo- und duroplastische Kunstharze auf Phenolbasis eingesetzt.

Bei der Verkokung dieser Binderharze entstehen organische Crackprodukte. Weiterhin erfolgt, insbesondere bei der Verwendung thermoplastischer Kunstharze oder Peche, während des Temperaturanstiegs zu Beginn des Verkokungsprozesses eine vorübergehende Erweichung des Bindemittels. Während dieser Phase ist die Formstabilität der Brenn- bzw. Absorberelementpresslinge herabgesetzt.

Diese bei der Verkokung von Bindeharzen üblicherweise auftretenden Probleme, Freisetzung auch höher kondensierter schwerflüchtiger Crackprodukte und vorübergehend herabgesetzte Formstabilität der Presslinge, haben dazu geführt, dass die Verkokung der kugelförmigen Presslinge nahezu ausschliesslich chargenweise in Topföfen durchgeführt wird. Hierbei werden die Kugeln auf Chargierblechen so positioniert, dass sie sich nicht gegenseitig berühren, um ein mögliches Verkleben mit Crackprodukten sicher zu unterbinden.

Dabei muss entweder die Lagerung der Presslinge so erfolgen, dass durch das Eigengewicht keine unzulässige Verformung während der Erweichungsphase des Binderharzes stattfindet, oder es müssen zur Erhaltung der Formstabilität duroplastische Binderharze eingesetzt werden. Alternativ können die Presslinge auch in einem Durchstossofen verkokt werden. Hierbei müssen die Kugeln einzeln in geeignetem Schiffchen durch den Ofen transportiert werden, um ein eventuelles gegenseitiges Berühren und Verkleben bzw. eine unzulässige Deformation zu unterbinden. In allen Fällen werden die Crackprodukte durch sogenannte Spülgase aus den Verkokungsöfen entfernt.

Beide Verfahren sind infolge des erheblichen Aufwands beim Be- und Entladen der Chargiergestelle oder der Schiffchen umständlich und ermöglichen pro Ofeneinheit nur begrenzte Durchsätze.

Es war daher Aufgabe der vorliegenden Erfindung, ein Verfahren zur Herstellung von kugelförmigen Brenn- oder Absorberelementen für Hochtemperaturreaktoren zu entwickeln, bestehend aus einer graphitischen Matrix und darin eingebetteten Partikeln, durch Pressen eines Gemisches von Binderharz enthaltendem Graphitpresspulver mit beschichteten Kernbrennstoff- oder Absorberpartikeln zu einer Kugel, Verkoken des Binderharzes in einem Ofen mit Gasspülung und Vakuumglühen bis etwa 2000 °C, wobei eine kontinuierliche Betriebsweise mit hohen Durchsätzen erzielt werden sollte, ohne Verkleben der Kugeln oder Inkaufnahme einer zeitweiligen Forminstabilität und ohne Einsatz von Transporthilfsmitteln.

Als Binderharz wird ein duroplastisches Kunstharz eingesetzt. Diese Aufgabe wurde erfindungsgemäss dadurch gelöst, dass nach dem Pressen der Kugeln dieses Binderharz zunächst bei Temperaturen zwischen 110 und 170 °C über mindestens 4 Stunden vollständig ausgehärtet wird, und dass die Kugeln anschliessend innerhalb von 1 bis 10 Stunden zur Verkokung des Binderharzes den um 2 bis 12° gegen die Horizontale abwärts geneigten Ofen durchlaufen, wobei der Ofen ein von der Kugelzugabeseite zur Kugelentnahmeseite von rund 100 auf 800 bis 1000 °C ansteigendes und von 800 bis 1000 °C auf rund 100 °C steil abfallendes Temperaturprofil aufweist, und wobei das Spülgas sowohl von der Kugelzugabeseite als auch von der Kugelentnahmeseite aus dem Ofen zugeführt und im Ofenbereich mit einer Temperatur von 400 bis 500 °C auf dem ansteigenden Temperaturprofilast abgeführt wird.

Vorzugsweise verwendet man als Binderharz ein Kunstharz auf der Basis von Phenol und Hexamethylentetramin. Ausserdem sollte die Ofentemperatur einen Maximalwert von 800 bis 1000 °C nicht überschreiten, wobei diese Temperatur über 10 bis 20% der Ofenlänge eingehalten werden muss. Als vorteilhaft hat es sich ausserdem herausgestellt, wenn die Ofenneigung 3 bis 10 ° gegenüber der Horizontalen beträgt.

Aus Gründen der Formstabilität der Kugeln werden nur duroplastische Binderharze, vorzugsweise auf der Basis Phenol/Hexamethylentetramin, eingesetzt und der Verkokung ein eigener Verfahrensschritt vorangestellt, in dem dieses Binderharz nach Formgebung der Brenn- bzw. Absorberelemente zunächst bei Temperaturen zwischen

110 und 170 °C über mindestens 4 Stunden vollständig ausgehärtet wird. Diese ausgehärteten Elemente können den leicht gegen die Horizontale geneigten Durchlaufkanal des Verkokungsofens ohne jedes weitere Hilfsmittel allein durch Schwerkraftentwicklung durchrollen, wobei ein Verkleben oder Blockieren dadurch verhindert wird, dass im Ofen, vorzugsweise durch mehrere Heizzonen, ein bestimmtes Temperaturprofil eingestellt wird und die Spülgase sowohl von der Seite der Kugelzugabe als auch von der Seite der Kugelentnahme dem Ofen zugeführt und in dem Bereich dem Ofen entnommen werden, in dem eine Temperatur zwischen 400 und 500 °C herrscht.

Überraschenderweise hatte sich ergeben, dass bei Kugeln, in denen das duroplastische Binderharz des Matrixmaterials vollständig ausgehärtet ist, durch die besondere Führung des Spülgases im Verkokungsofen auch die schwerflüchtigen Crackprodukte so sicher entfernt werden, dass ein Verkleben von Kugeln untereinander oder eine Ablagerung von Crackproduktrückständen im Durchlaufkanal, die das freie Durchrollen behindern würde, unterbunden wird. Durch die kombinierte Anwendung eines ausgehärteten duroplastischen Binderharzes mit der beschriebenen Spülgasführung ist es möglich, kontinuierlich Kugeln als ununterbrochene Säule durch den Ofen rollen zu lassen, wobei sich die Kugeln ohne weiteres berühren können, und so hohe Durchsätze zu erzielen. Die Anwendung von Transporthilfsmitteln ist dabei nicht erforderlich.

Das folgende Beispiel soll das erfindungsgemässe Verfahren erläutern:
Tausend Kugeln werden unter Verwendung eines Graphitpresspulvers hergestellt, das aus 78% feingemahlenen Naturgraphit-/Elektrographitpulvergemisch sowie 22% Binderharz (Phenol- und Hexamethylentetramin in einem Verhältnis von 5:1 – 10:1) besteht. Nach dem Verpressen wurden die Presslinge während ca. 4 Stunden einer Temperatur von 150 °C ausgesetzt, hierbei erfolgte die vollständige Aushärtung des Bindemittels.

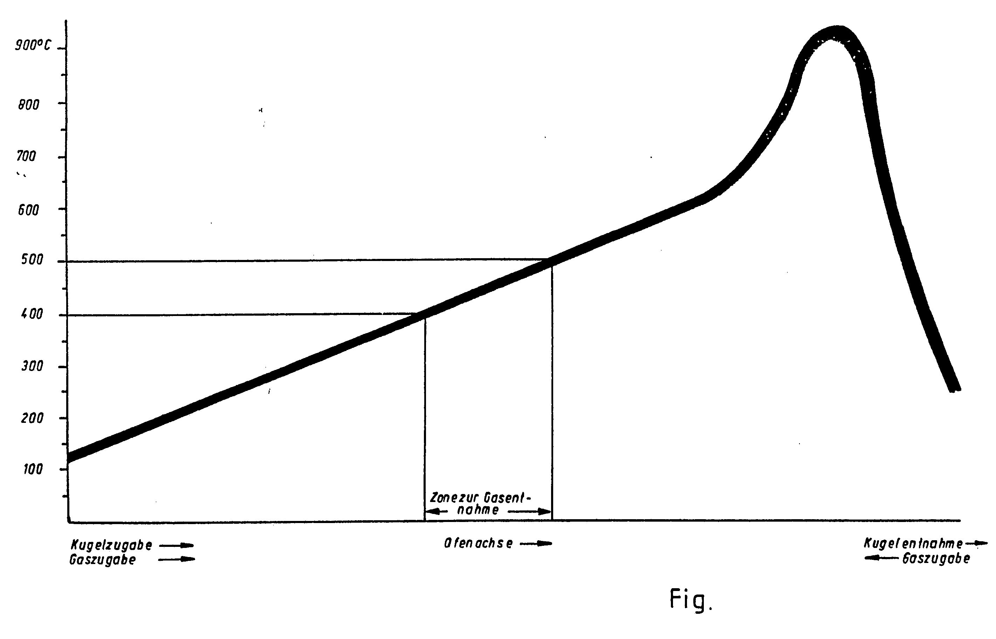

Diese Kugeln wurden in einer Serie durch einen etwa 4 m langen Druchlaufofen mit sechs Heizkreisen und dem in der Abbildung wiedergegebenen Temperaturprofil durchgesetzt, wobei die Spülgase den Ofen in den in der Abbildung skizzierten Weise durchfluteten und die Gesamt-Verweilzeit für die einzelne Kugel vom Eintritt bis zum Austritt ebenfalls ca. 4 Stunden betrug. Die Achse des Durchlaufkanals war dabei um ca. 5° gegen die Horizontale geneigt, um ein einwandfreies Durchrollen sicherzustellen. Die Transportgeschwindigkeit der hierbei im Durchlaufkanal aufgestauten Kugelsäule wurde durch das Ausschleusen geregelt: Mit zunehmenden Intervall zwischen den Entnahmezeitpunkten zweier in Folge entnommener Kugeln nimmt die effektive Transportgeschwindigkeit der nachrollenden Kugelsäule ab. Als Spülgas wurde Argon mit einem Durchsatz von 500 l/h eingesetzt. Anschliessend wurden die Kugeln in gewohnter Weise im Vakuum bei Temperaturen oberhalb 1600 °C gereinigt und entgast.

Parallel hierzu wurden Kugeln unter Verwendung des gleichen Graphitpresspulvers in konventioneller Weise hergestellt. Für die wesentlichen Eigenschaften des fertigen Matrixmaterials (Dichte, Festigkeit, Korrosionsbeständigkeit) ergaben sich keine statistisch signifikanten Unterschiede zwischen den konventionell und den nach dem erfindungsgemässen Verfahren hergestellten Kugeln.

### Patentansprüche

1. Verfahren zur Herstellung von kugelförmigen Brenn- oder Absorberelementen für Hochtemperaturreaktoren, bestehend aus einer graphitischen Matrix und darin eingebetteten beschichteten Partikeln, durch Pressen eines Gemisches von Binderharz enthaltendem Graphitpresspulver mit beschichteten Kernbrennstoff- oder Absorberpartikeln zu einer Kugel, Verkoken des Binderharzes in einem Ofen mit Gasspülung und Vakuumglühen bis etwa 2000 °C, wobei als Binderharz ein duroplastisches Kunstharz eingesetzt wird, dadurch gekennzeichnet, dass nach dem Pressen der Kugel dieses Binderharz zunächst bei Temperaturen zwischen 110 und 170 °C über mindestens 4 Stunden vollständig ausgehärtet wird und dass die Kugeln anschliessend innerhalb von 1 bis 10 Stunden zur Verkokung des Binderharzes den um 2 bis 12° gegen die Horizontale abwärts geneigten Ofen durchlaufen, wobei der Ofen ein von der Kugelzugabeseite zur Kugelentnahmeseite von rund 100 auf 800 bis 1000 °C ansteigendes und von 800 bis 1000 auf rund 100 °C steil abfallendes Temperaturprofil aufweist, und wobei das Spülgas sowohl von der Kugelzugabeseite als auch von der Kugelentnahmeseite aus dem Ofen zugeführt und im Ofenbereich mit einer Temperatur von 400 bis 500 °C auf dem ansteigenden Temperaturprofilast abgeführt wird.

2. Verfahren nach Anspruch 1, dadurch gekennzeichnet, dass als Binderharz ein Kunstharz auf der Basis von Phenol und Hexamethylentetramin verwendet wird.

3. Verfahren nach Anspruch 1 und 2, dadurch gekennzeichnet, dass die Ofentemperatur einen Maximalwert von 800 bis 1000 °C aufweist, der über 10 bis 20% der Ofenlänge eingehalten wird.

4. Verfahren nach Anspruch 1 bis 3, dadurch gekennzeichnet, dass die Neigung des Ofens gegenüber der Horizontalen 3 bis 10° beträgt.

### Claims

1. A process for the production of spherical fuel or absorber elements for high-temperature reactors, consisting of a graphite matrix and coated particles embedded therein, by compressing a mixture of graphite pressing powder containing binder resin with coated nuclear fuel or absorber particles into a sphere, coking the binder resin in a gaspurged furnace and calcining in vacuo up to about 2000 °C, a duroplastic resin being used as the binder resin, characterized in that, after the sphere has been pressed, the binder resin is first completely hardened for at least 4 hours at temperatures of 110 to 170 °C and in that the spheres then pass through the furnace inclined downwards through 2 to 12° to the horizontal in 1 to 10 hours to coke the binder resin, the furnace having a temperature profile which rises from around 100 to 800−1000 °C and falls steeply from 800−1000 to around 100 °C from the sphere input end to the sphere output end and the purging gas being fed to the furnace both from the sphere input end and from the sphere output end and being removed in the vicinity of the furnace with a temperature of 400 to 500 °C on the rising side of the temperature profile.

2. A process as claimed in claim 1, characterized in that a synthetic resin based on phenol and hexamethylenetetramine is used as the binder resin.

3. A process as claimed in claims 1 and 2, characterized in that the furnace temperature has a maximum value of 800 to 100 °C which is maintained over 10 to 20% of the furnace length.

4. A process as claimed in claims 1 to 3, characterized in that the furnace is inclined at 3 to 10° to the horizontal.

## Revendications

1. Procédé pour la production d'éléments combustibles ou absorbants sphériques pour réacteurs à haute température, composés d'une matière de corps en graphite et de particules enrobées noyées dans celle-ci, par compression en un boulet d'un mélange de poudre de graphite à comprimer, contenant une résine de liaison, et de particules d'absorbant ou de combustible nucléaire, enrobées, cokéfaction de la résine de liaison dans un four à balayage, et recuit sous vide jusqu'à 2000 °C environ, une résine thermodurcissable étant utilisée en tant que résine de liaison, caractérisé en ce qu'après la compression, on fait d'abord durcir complètement les boulets de cette résine de liaison, en au moins 4 heures, à des températures comprises entre 110 et 170 °C, et que l'on fait passer ensuite les boulets, en l'espace de 1 à 10 heures, pour la cokéfaction de la résine de liaison, dans le four incliné de 2 à 12° par rapport à l'horizontale, le four présentant un profil de températures ascendant d'environ 100 à 800−1000 °C et descendant brusquement de 800−1000 °C à environ 100 °C, du côté de l'admission des boulets au côté de la sortie des boulets, et le gaz de balayage étant introduit dans le four aussi bien par le côté de l'admission des boulets que par le côté de la sortie des boulets, et étant évacué dans la zone du four ayant une température de 400 à 500 °C sur la partie ascendante du profil des températures.

2. Procédé selon la revendication 1, caractérisé en ce qu'il est utilisé en tant que résine de liaison, une résine synthétique à base de phénol et hexaméthylènetétramine.

3. Procédé selon les revendications 1 ou 2, caractérisé en ce que la température du four présente une valeur maximale de 800 à 1000 °C, qui est maintenue sur 10 à 20% de la longueur du four.

4. Procédé selon l'une quelconque des revendications 1 à 3, caractérisé en ce que l'inclinaison du four par rapport à l'horizontale est de 3 à 10°.

Fig.